# EUROPEAN PATENT APPLICATION

(11) **EP 4 030 421 A1**
(43) Date of publication of application: **20.07.2022**
(21) Application number: 21783381.3
(22) Date of filing: 03.08.2021
(51) Int. Cl.: G10L 13/033, G10L 13/08, G10L 15/26, G10L 15/06, G10L 15/04, G06N 3/08

(54) **METHOD FOR CONVERTING VOICE FEATURE OF VOICE**

(30) Priority: 18.11.2020 KR 20200154581
(71) Applicant: MINDS LAB INC., Yuseong-gu, Daejeon 34111 (KR)
(72) Inventor: CHOI, Hong Seop, Yongin-si Gyeonggi-do 16859 (KR); PARK, Seung Won, Yongin-si Gyeonggi-do 16857 (KR)
(74) Representative: Loyer & Abello
(86) International application number: PCT/KR2021/010116
(87) International publication number: WO 2022/108040

(57) **Abstract**

The disclosure relates to a method and apparatus for converting a voice of a first speaker into a voice of a second speaker by using a plurality of trained artificial neural networks.

## Description

### TECHNICAL FIELD

The disclosure relates to a method and apparatus for converting a voice of a first speaker into a voice of a second speaker by using a plurality of trained artificial neural networks.

### BACKGROUND ART

Speech synthesis (text-to-speech) technology refers to a technology of converting input text into human speech and outputting the human speech.

In conventional speech synthesis technology, a recorded voice of a speaker is separated into phonemes to build a voice database, appropriate phonemes are extracted through analysis of input text, and the extracted phonemes are concatenated to generate synthesized speech.

Such conventional speech synthesis technology has problems in that, because voices corresponding to input text characters are simply continuously output, intonation, vocal sound, etc. are somewhat unnatural, and thus it is difficult to use the conventional speech synthesis for purposes other than a simple information transfer function.

Also, the conventional speech synthesis has problems in that, because a vast voice database should be built for speech synthesis, a lot of effort and time for speech synthesis are required, and also because a style or sound of a generated voice may not be changed, it is difficult to apply the conventional speech synthesis to various service fields.

### DESCRIPTION OF EMBODIMENTS

### TECHNICAL PROBLEM

In order to solve these problems, the disclosure provides a more natural voice by 'generating' a previously generated voice into a voice of a specific speaker, rather than 'synthesizing' a voice by simply continuously outputting pre-recorded voices.

Also, the disclosure converts a voice without degrading the quality thereof.

### SOLUTION TO PROBLEM

A method of converting a voice feature of a voice according to an embodiment of the disclosure includes: generating a first audio vector corresponding to a first voice by using a first artificial neural network, wherein the first audio vector indistinguishably includes a text feature value of the first voice, a voice feature value of the first voice, and a style feature value of the first voice, and the first voice is a voice according to utterance of a first text of a first speaker; generating a first text feature value corresponding to the first text by using a second artificial neural network; generating a second audio vector by removing the voice feature value of the first voice from the first audio vector by using the first text feature value and a third artificial neural network; and generating, by using the second audio vector and a voice feature value of a target voice, a second voice in which a feature of the target voice is reflected.

The generating of the first text feature value may include: generating a second text from the first voice; and generating the first text based on the second text.

Before the generating of the first audio vector, the method may further include training the first artificial neural network, the second artificial neural network, and the third artificial neural network.

The training may include: generating a fifth voice in which a voice feature of a second speaker is reflected from a third voice by using the first artificial neural network, the second artificial neural network, and the third artificial neural network, wherein the third voice is a voice according to utterance of a third text of the first speaker; and training the first artificial neural network, the second artificial neural network, and the third artificial neural network based on a difference between the fifth voice and a fourth voice, wherein the fourth voice is a voice according to utterance of the third text of the second speaker.

Before the generating of the second voice, the method may further include identifying the voice feature value of the target voice.

An apparatus for converting a voice feature of a voice according to an embodiment of the disclosure is configured to generate a first audio vector corresponding to a first voice by using a first artificial neural network, wherein the first audio vector indistinguishably includes a text feature value of the first voice, a voice feature value of the first voice, and a style feature value of the first voice, and the first voice is a voice according to utterance of a first text of a first speaker, generate a first text feature value corresponding to the first text by using a second artificial neural network, generate a second audio vector by removing the voice feature of the first voice from the first audio vector by using the first text feature value and a third artificial neural network, and generate a second voice in which a feature of a target voice is reflected by using the second audio vector and a voice feature value of the target voice.

The apparatus may be further configured to generate a second text from the first voice, and generate the first text based on the second text.

The apparatus may be further configured to train the first artificial neural network, the second artificial neural network, and the third artificial neural network, before the first audio vector is generated.

The apparatus may be further configured to generate a fifth voice in which a voice feature of a second speaker is reflected from a third voice by using the first artificial neural network, the second artificial neural network, and the third artificial neural network, wherein the third voice is a voice according to utterance of a third text of the first speaker, and train the first artificial neural network, the second artificial neural network, and the third artificial neural network based on a difference between the fifth voice and a fourth voice. The fourth voice may be a voice according to utterance of the third text of the second speaker.

The apparatus may be further configured to identify the voice feature value of the target voice, before the second voice is generated.

### ADVANTAGEOUS EFFECTS OF DISCLOSURE

According to the disclosure, a more natural voice may be provided by 'generating' a previously generated voice into a voice of a specific speaker, rather than 'synthesizing' a voice by simply continuously outputting pre-recorded voices.

### RIEF DESCRIPTION OF DRAWINGS

FIG. 1 is a diagram illustrating a configuration of a voice generation system, according to an embodiment of the disclosure.
FIG. 2 is a diagram illustrating a configuration of a voice converter provided in a server, according to an embodiment of the disclosure.
FIGS. 3 and 4 are diagrams for describing a structure of an artificial neural network trained by a voice converter of the disclosure.
FIGS. 5 and 6 are diagrams for describing a voice converter according to a first embodiment of the disclosure.
FIGS. 7 and 8 are diagrams for describing a voice converter according to a second embodiment of the disclosure.
FIGS. 9 and 10 are diagrams for describing a training process of the voice converter according to the first embodiment of the disclosure.
FIG. 11 is a flowchart for describing a method of converting a voice feature of a voice performed by the voice converter according to the first embodiment of the disclosure.

### BEST MODE

A method of converting a voice feature of a voice according to an embodiment of the disclosure includes: generating a first audio vector corresponding to a first voice by using a first artificial neural network, wherein the first audio vector indistinguishably includes a text feature value of the first voice, a voice feature value of the first voice, and a style feature value of the first voice, and the first voice is a voice according to utterance of a first text of a first speaker; generating a first text feature value corresponding to the first text by using a second artificial neural network; generating a second audio vector by removing the voice feature value of the first voice from the first audio vector by using the first text feature value and a third artificial neural network; and generating, by using the second audio vector and a voice feature value of a target voice, a second voice in which a feature of the target voice is reflected.

### MODE OF DISCLOSURE

As the disclosure allows for various changes and numerous embodiments, certain embodiments will be illustrated in the drawings and described in the detailed description. Effects and features of the disclosure, and methods for achieving them will be clarified with reference to embodiments described below in detail with reference to the drawings. However, the disclosure is not limited to the following embodiments and may be embodied in various forms.

Hereinafter, embodiments will be described in detail with reference to the accompanying drawings, wherein the same or corresponding elements are denoted by the same reference numerals throughout and a repeated description thereof is omitted.

Although the terms "first," "second," etc. may be used to describe various elements, these elements should not be limited by these terms. These terms are only used to distinguish one element from another. As used herein, the singular forms "a," "an," and "the" are intended to include the plural forms as well, unless the context clearly indicates otherwise. It will be understood that the terms "including," "having," and "comprising" are intended to indicate the existence of the features or elements described in the specification, and are not intended to preclude the possibility that one or more other features or elements may exist or may be added. Sizes of components in the drawings may be exaggerated or contracted for convenience of explanation. For example, because sizes and shapes of elements in the drawings are arbitrarily illustrated for convenience of explanation, the disclosure is not limited thereto.

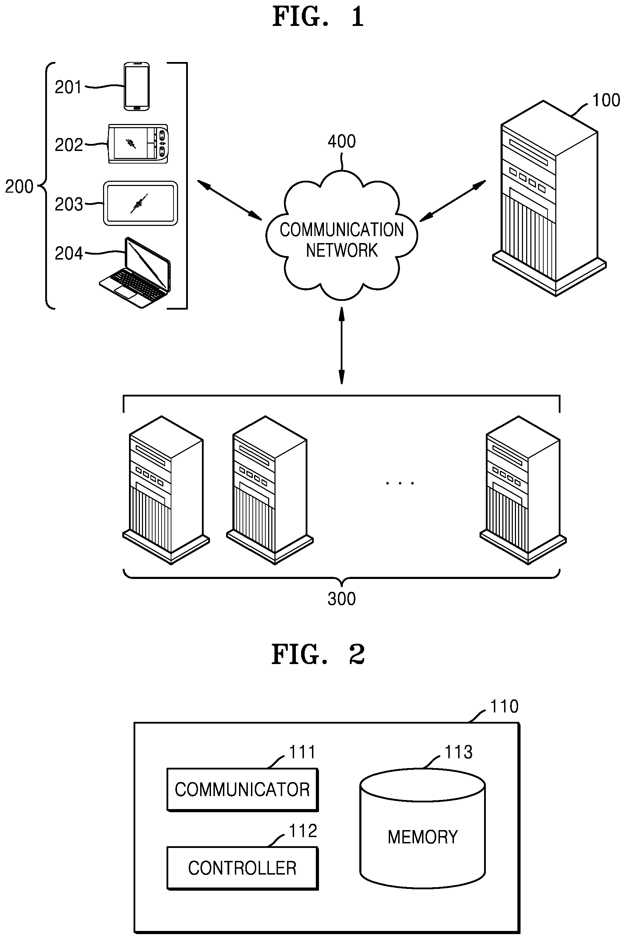

FIG. 1 is a diagram illustrating a configuration of a voice generation system, according to an embodiment of the disclosure.

A voice generation system according to an embodiment of the disclosure may convert a voice according to utterance of a first speaker into a voice according to utterance of a second speaker by using a plurality of trained artificial neural networks.

The voice generation system according to an embodiment of the disclosure may include a server 100, a user terminal 200, an external device 300, and a communication network 400 as shown in FIG. 1.

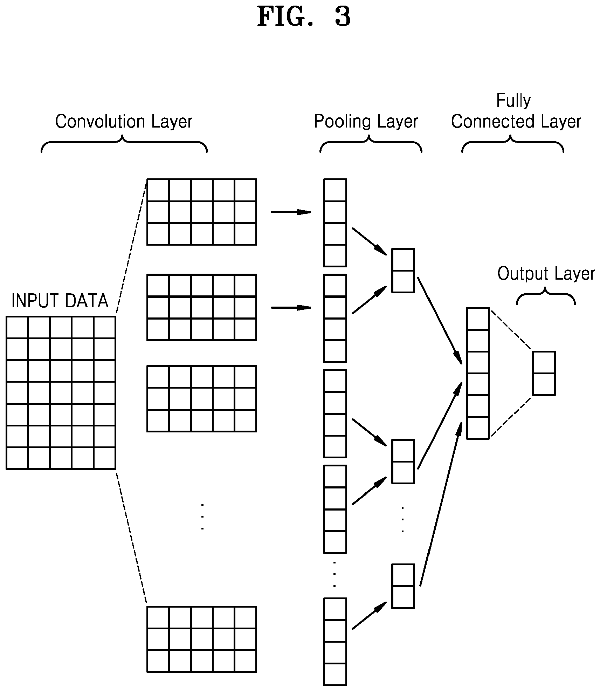

In the specification, the term 'artificial neural network' such as a first artificial neural network, a second artificial neural network, and a third artificial neural network is a neural network trained to be suitable for a service performed by the server 100 and/or the external device 300, and may be trained by machine learning or deep learning. A structure of a neural network will be described with reference to FIG. 3.

In the disclosure, the term 'voice' that is a person's vocal sound or speech sound may refer to a specific and physical sound made by a human sound-producing organ. For example, in the disclosure, the term 'first voice' may be a sound according to utterance of a first text of the first speaker.

In an embodiment of the disclosure, a voice may be generated by a person, or may be generated by a device such as the server 100. Accordingly, in the disclosure, a voice may be used a concept including a sound according to utterance of a person.

In the disclosure, 'generation' of a voice is generation of a voice by using one or more individual frequency components constituting the voice, and may be distinct from 'synthesis' of a voice. Accordingly, generation of a voice refers to a method different from a method of synthesizing voices in which pieces of speech previously recorded in certain units (e.g., pieces of speech recorded in units of phonemes) are simply concatenated together according to an order of a target string.

In the disclosure, 'conversion' of a voice may refer to conversion of a voice feature of a voice. That is, in the disclosure, when a voice is converted, it may mean that a voice feature of an original voice is replaced with a voice feature of a target voice.

The user terminal 200 according to an embodiment of the disclosure may refer to any of various types of devices that mediates between a user and the server 100 and/or the external device 300 so that the user uses various services provided by the server 100 and/or the external device 300. In other words, the user terminal 200 according to an embodiment of the disclosure may refer to any of various devices that transmit/receive data to/from the server 100 and/or the external device 300.

The user terminal 200 according to an embodiment of the disclosure may be a device that transmits the first voice to be converted to the server 100, and receives a converted voice from the server 100 (i.e., a voice to which a voice feature of another speaker is applied). As such, the user terminal 200 may be any of portable terminals 201, 202, and 203, or may be a computer 204, as shown in FIG. 1.

The user terminal 200 may include a display unit for displaying content or the like to perform the above function, and an input unit for obtaining an input of the user for the content. In this case, each of the input unit and the display unit may be configured in various ways. Examples of the input unit may include, but are not limited to, a keyboard, a mouse, a trackball, a microphone, a button, and a touch panel.

The external device 300 according to an embodiment of the disclosure may refer to a device that sells a service for converting a voice feature of a voice. For example, the external device 300 may be a device that transmits a voice of the user to be converted to the server 100, receives a converted voice from the server 100, and provides a generated voice to various devices (e.g., a client device (not shown)) connected to the external device 300.

In other words, the external device 300 may be a device of a third party for using a service of converting a voice feature of a voice provided by the server 100 for its own service. However, this is merely an example, and the use, purpose, and/or quantity of the external device 300 is not limited to the above description.

The communication network 400 according to an embodiment of the disclosure may refer to a communication network that mediates data transmission/reception between elements of the voice generation system. Examples of the communication network 400 may include, but are not limited to, a wired network such as a local area network (LAN), a wide area network (WAN), a metropolitan area network (MAN), or an integrated service digital network (ISDN), and a wireless network such as a wireless LAN, code-division multiple access (CDMA), Bluetooth, or satellite communication.

The server 100 according to an embodiment of the disclosure may convert a voice according to utterance of the first speaker into a voice according to utterance of the second speaker by using a plurality of trained artificial neural networks as described above.

FIG. 2 is a diagram illustrating a configuration of a voice converter 110 provided in the server 100, according to an embodiment of the disclosure.

Referring to FIG. 2, the voice converter 110 according to an embodiment of the disclosure may include a communicator 111, a controller 112, and a memory 113. Also, although not shown in FIG. 2, the voice converter 110 according to the present embodiment may further include an inputter/outputter and a program storage.

The communicator 111 may be a device including hardware and software required for the voice converter 110 to transmit/receive a signal such as a control signal or a data signal through wired/wireless connection with another network device such as the user terminal 200 and/or the external device 300.

The controller 112 may include any type of device capable of processing data such as a processor. Here, the term 'processor' may refer to, for example, a hardware-implemented data processing device having circuitry that is physically structured to execute functions represented as code or a command included in a program. Examples of the hardware-implemented data processing device may include, but are not limited to, a microprocessor, a central processing unit (CPU), a processor core, a multiprocessor, an application-specific integrated circuit (ASIC), and a field programmable gate array (FPGA).

The memory 113 temporally or permanently stores data processed by the voice converter 110. The memory may include, but is not limited to, a magnetic storage medium or a flash storage medium. For example, the memory 113 may temporarily and/or permanently store data (e.g., coefficients) constituting artificial neural networks.

The memory 113 may also store training data for training the artificial neural networks. However, this is merely an example, and the spirit of the disclosure is not limited thereto.

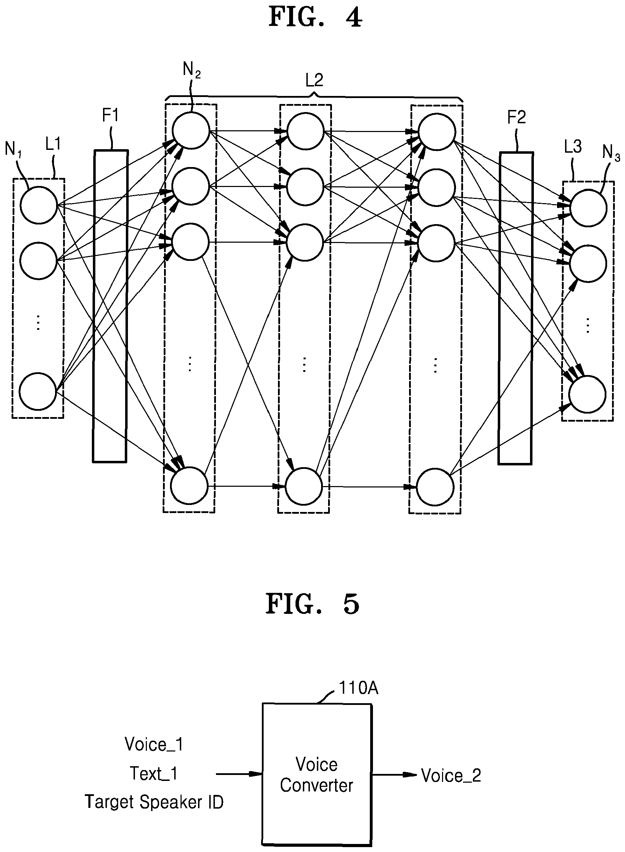

FIGS. 3 and 4 are diagrams for describing a structure of an artificial neural network trained by the voice converter 110 of the disclosure. For convenience of explanation, a first artificial neural network, a second artificial neural network, and a third artificial neural network are collectively referred to as 'artificial neural networks'.

An artificial neural network according to an embodiment of the disclosure may be an artificial neural network according to a convolutional neural network (CNN) model as shown in FIG. 3. In this case, the CNN model may be a hierarchical model used to finally extract a feature of input data by alternately performing a plurality of computational layers (a convolutional layer and a pooling layer).

The controller 112 according to an embodiment of the disclosure may build or train an artificial neural network model by processing training data according to supervised learning. A method in which the controller 112 trains an artificial neural network will be described below in detail.

The controller 112 according to an embodiment of the disclosure may train, by using a plurality of training data, an artificial neural network by repeatedly performing a process of refining a weight of each layer and/or each node so that an output value generated by inputting one input data to the artificial neural network approaches a value labeled in the corresponding training data. In this case, the controller 112 according to an embodiment of the disclosure may refine a weight (or a coefficient) of each layer and/or each node according to a back propagation algorithm.

The controller 112 according to an embodiment of the disclosure may generate a convolution layer for extracting feature values of input data and a pooling layer for configuring feature maps by combining the extracting feature values.

Also, the controller 112 according to an embodiment of the disclosure may combine the generated feature maps, to generate a fully connected layer that prepares to determine a probability that the input data corresponds to each of a plurality of items.

The controller 112 according to an embodiment of the disclosure may calculate an output layer including an output corresponding to the input data.

Although input data is divided into 5X7 blocks, a 5X3 unit block is used to generate a convolution layer, and a 1X4 or 1X2 unit block is used to generate a pooling layer in FIG. 3, this is merely an example and the spirit of the disclosure is not limited thereto. Accordingly, a type of input data and/or a size of each block may be determined in various ways.

Such an artificial neural network may be stored in the memory 113 as coefficients of at least one node constituting the artificial neural network, a weight of the node, and coefficients of a function defining a relationship between a plurality of layers included in the artificial neural network. A structure of the artificial neural network may also be stored as a source code and/or a program in the memory 113.

The artificial neural network according to an embodiment of the disclosure may be an artificial neural network according to a recurrent neural network (RNN) model as shown in FIG. 4.

Referring to FIG. 4, the artificial neural network according to an RNN model may include an input layer L1 including at least one input node N₁, a hidden layer L2 including a plurality of hidden nodes N₂, and an output layer L3 including at least one output node N₃. In this case, a content feature value, a style feature value, and a voice feature value may be input to the at least one input node N₁ of the input layer L1. The content feature value, the style feature value, and the voice feature value will be described below in detail.

The hidden layer L2 may include one or more fully connected layers as shown in FIG. 4. When the hidden layer L2 includes a plurality of layers, the artificial neural network may include a function (not shown) that defines a relationship between hidden layers.

The at least one output node N₃ of the output layer L3 may include an output value generated by the artificial neural network from an input value of the input layer L1 under the control of the controller 112. For example, the output layer L3 may include at least one pixel value constituting an image corresponding to the content feature value, the style feature value, and the voice feature value. However, this is merely an example, and the spirit of the disclosure is not limited thereto.

A value included in each node of each layer may be a vector. Also, each node may include a weight corresponding to the importance of the node.

The artificial neural network may include a first function F1 that defines a relationship between the input layer L1 and the hidden layer L2, and a second function F2 that defines a relationship between the hidden layer L2 and the output layer L3.

The first function F1 may define a connection relationship between the input node N₁ included in the input data L1 and the hidden node N₂ included in the hidden layer L2. Likewise, the second function F2 may define a connection relationship between the hidden node N₂ included in the hidden layer L2 and the output node N₃ included in the output layer L3.

The first function F1, the second function F2, and functions between the hidden layers may include an RNN model that outputs a result based on an input of a previous node.

While the artificial neural network is trained by the controller 112, the artificial neural network may be trained as to the first function F1 and the second function F2 based on a plurality of training data. While the artificial neural network is trained, the artificial neural network may also be trained as to functions between the plurality of hidden layers in addition to the first function F1 and the second function F2.

The artificial neural network according to an embodiment of the disclosure may be trained by using supervised learning based on labeled training data.

The controller 112 according to an embodiment of the disclosure may train, by using a plurality of training data, an artificial neural network by repeatedly performing a process of refining the above functions (e.g., F1, F2, and the functions between the hidden layers) so that an output value generated by inputting one input data to the artificial neural network approaches a value labeled in the training data.

In this case, the controller 112 according to an embodiment of the disclosure may refine the above functions (e.g., F1, F2, and the functions between the hidden layers) according to a back propagation algorithm. However, this is merely an example, and the spirit of the disclosure is not limited thereto.

Types and/or structures of artificial neural networks described with reference to FIGS. 3 and 4 are merely examples, and the spirit of the disclosure is not limited thereto. Accordingly, an artificial neural network of any of various types of models may correspond to the 'artificial neural network' described in the specification.

A method of converting a voice feature of a voice by using a trained artificial neural network will be first described, and a method of training the artificial neural network will be described later.

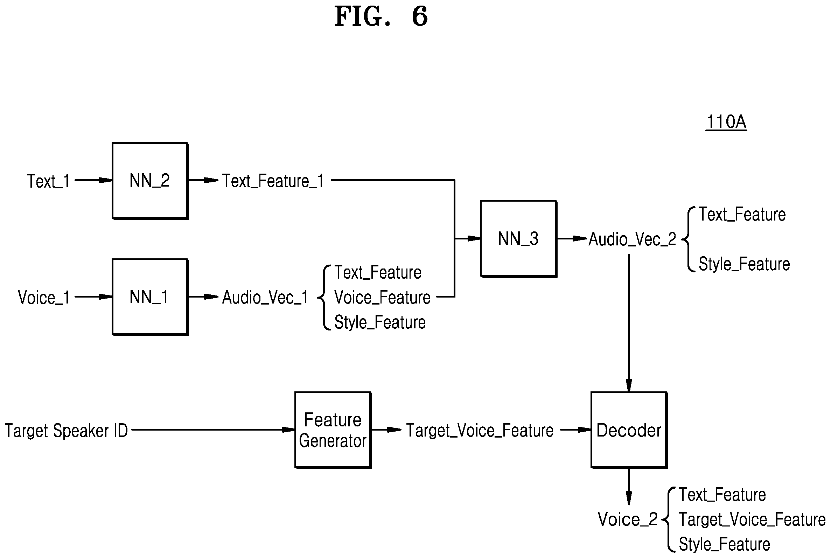

FIGS. 5 and 6 are diagrams for describing a voice converter 110A according to a first embodiment of the disclosure. The following will be described with reference to FIGS. 5 and 6 together.

The voice converter 110A according to the first embodiment of the disclosure may generate a second voice Voice_2 from a first voice Voice_1, according to an input of the first voice Voice_1, a first text Text_1, and a target speaker ID. In this case, the second voice Voice_2 may be a voice in which a voice feature of a target speaker is reflected.

In more detail, the voice converter 110A may generate a first audio vector Audio_Vec_1 corresponding to the first voice Voice_1 by using a first artificial neural network NN1. In this case, the first audio vector Audio_Vec_1 may indistinguishably include a text feature value Text_Feature of the first voice Voice_1, a voice feature value Voice_Feature of the first voice Voice_1, and a style feature value Style_Feature of the first voice Voice_1.

In the disclosure, the term 'text feature value Text_Feature' may refer to a value that indicates a content feature of a string corresponding to a voice or in which the content feature is reflected. Such a text feature value Text_Feature may be generated according to a process of dividing a text into characters and converting each character into a vector value. However, this is merely an example, and the spirit of the disclosure is not limited thereto.

In the disclosure, the term 'style feature value Style_Feature' may refer to a value corresponding to at least one of an emotion of a speaker, a situation of the speaker, and a speaking habit of the speaker. Such a style feature value may be a value in which, for example, a speaking speed of a speaker or a habit of pronouncing with a specific final consonant is reflected.

In the disclosure, the term 'voice feature value Voice_Feature' may refer to a value corresponding to fundamental voice characteristics of a speaker, regardless of an emotion of the speaker or a situation of the speaker.

In the disclosure, the term 'first artificial neural network NN1' may refer to a neural network that is trained, based on training data including a voice and a vector corresponding to the voice, about a correlation between the voice and the vector included in the training data.

Accordingly, the first artificial neural network NN1 may output, according to an input of a voice to be vectorized, an audio vector corresponding to the voice.

In the disclosure, the first audio vector Audio_Vec_1 output (or generated) by the first artificial neural network NN1 according to an input of the first voice Voice_1 may indistinguishably include the text feature value Text_Feature of the first voice Voice_1, the voice feature value Voice_Feature of the first voice Voice_1, and the style feature value Style_Feature of the first voice Voice_1 as described above. Here, 'indistinguishably' may mean that individual feature values may not be distinguished by using general technology or intuitively.

According to the prior art, because the three feature values are distinguishably included in a vector, the individual feature values may not be appropriately used. For example, in an audio vector, an operation of converting a voice by extracting and changing only a voice feature value or converting a style by extracting and changing only a style feature value may not be performed, unlike in the present application.

According to the disclosure, however, in an audio vector generated from a voice by using a trained artificial neural network, voice conversion with significantly improved quality may be performed by extracting and replacing only a component contributing to a voice feature of the voice.

In particular, according to the disclosure, in an audio vector, when only a component contributing to a voice feature of a voice is extracted, more precise voice conversion may be performed by extracting the component by referring to the remaining components, which will be described below in detail.

The voice converter 110A according to the first embodiment of the disclosure may generate a first text feature value Text_Feature_1 corresponding to the first text Text_1 by using a second artificial neural network NN2. In this case, the first text Text_1 may be a text corresponding to the first voice Voice_1. In other words, the first voice Voice_1 may be a voice according to utterance of the first text Text_1 of a first speaker.

In the disclosure, the term 'second artificial neural network NN2' may refer to a neural network that is trained, based on training data including a text and a vector corresponding to content of the text, about a correlation between the text and the vector included in the training data.

Accordingly, the second artificial neural network NN2 may output, according to an input of a text, a text feature value corresponding to content of the text.

In an optional embodiment of the disclosure, the voice converter 110A may generate the style feature value Style_Feature corresponding to the first voice Voice_1 by using a fourth artificial neural network (not shown).

In the disclosure, the term 'fourth artificial neural network (not shown)' may refer to a neural network that is trained, based on training data including a voice and a style feature value corresponding to the voice, about a correlation between the voice and the style feature value included in the training data.

Accordingly, the fourth artificial neural network (not shown) may output, according to an input of a voice, a style feature value corresponding to the voice.

The voice converter 110A according to the first embodiment of the disclosure may generate a second audio vector Audio_Vec_2 by removing the voice feature value Voice_Feature of the first voice from the first audio vector Audio_Vec_1 by using the first text feature value Text_Feature_1 generated according to the above process and a third artificial neural network NN3.

In the disclosure, the term 'third artificial neural network NN3' may refer to a neural network that is trained to output, according an input of a voice vector and a text feature value, a voice vector from which a voice feature value is removed.

In the first embodiment of the disclosure, the style feature value Style_Feature may be a constant (i.e., a value that does not change according to a change in a speaker). Accordingly, the voice converter 110A may generate the second audio vector Audio_Vec_2 by removing the voice feature value Voice_Feature of the first voice from the first audio vector Audio_Vec_1, by considering only the first text feature value Text_Feature_1.

In the disclosure, because the second audio vector Audio_Vec_2 is a vector from which the voice feature value Voice_Feature is removed as described above, the second audio vector Audio_Vec_2 may be a vector having a potential to be changed, according to addition of a voice feature value of a speaker, into a voice of the speaker.

In an optional embodiment of the disclosure further including the fourth artificial neural network, the voice converter 110A may generate the second audio vector Audio_Vec_2 by further considering a style feature value identified from the first voice Voice_1, in addition to the first text feature value Text_Feature_1.

The voice converter 110A according to the first embodiment of the disclosure may identify a voice feature value Target_Voice_Feature of a target voice by using a voice feature generator.

In this case, the voice feature generator may be implemented in various ways. For example, the voice feature generator may be configured to output, according to an input of an identification number (or identification information) of a target speaker, a voice feature value of the target speaker. To this end, the voice feature generator may be configured to include a pre-built database, and features of a plurality of target voices and identification information are matched to each other and are stored in the database.

Also, the voice feature generator may include an artificial neural network that outputs, according to an input of a voice, a voice feature value of the voice. In this case, the voice converter 110A may input a voice to the voice feature generator, and may obtain (or identify) a voice feature value of the voice as a response.

However, the implementation method of the voice feature generator is merely an example, and the spirit of the disclosure is not limited thereto.

The voice converter 110A according to the first embodiment of the disclosure may generate the second voice Voice_2 in which a feature of the target voice is reflected by using the second audio vector Audio_Vec_2 and the voice feature value Target_Voice_Feature of the target voice. In this case, the target voice may be, for example, a voice of a second speaker.

Accordingly, according to the disclosure, voice conversion with significantly improved quality may be performed. In particular, in an audio vector, when only a component contributed to a voice feature of a voice is extracted, more precise voice conversion may be performed by extracting the component by referring to the remaining components.

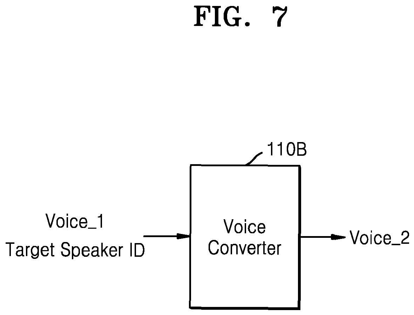

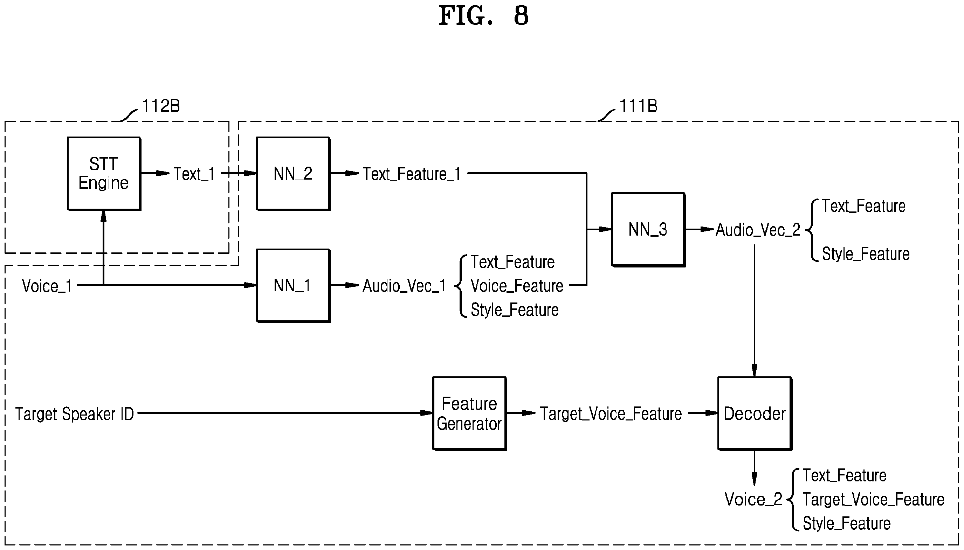

FIGS. 7 and 8 are diagrams for describing a voice converter 110B according to a second embodiment of the disclosure. The following will be described with reference to FIGS. 7 and 8 together.

The first voice converter 110A according to the first embodiment of the disclosure may generate, according to an input of a first voice Voice_1 and a target speaker ID, a second voice Voice_2 from the first voice Voice_1. In this case, the second voice Voice_2 may be a voice in which a voice feature of a target voice is reflected.

When compared to the voice converter 110A according to the first embodiment of the disclosure described with reference to FIGS. 5 and 6, an input of a first text Text_1 may be omitted for the voice converter 110B according to the second embodiment of the disclosure.

The voice converter 110B according to the second embodiment of the disclosure may be divided into a first portion 112B including a voice-text conversion engine STT Engine that generates the first text Text_1 from the first voice Voice_1, and a second portion 111B. The first portion 112B will be first described, and then second portion 111B will be described.

The voice converter 110B according to the second embodiment of the disclosure may generate the first text Text_1 corresponding to the first voice Voice_1 by using the voice-text conversion engine STT Engine. In this case, the voice-text conversion engine STT Engine may be implemented based on various well-known technologies for converting speech into text.

For example, the voice converter 110B may generate a second text from the first voice, and may generate the first text Text_1 based on the generated second text.

The voice converter 110B according to the second embodiment of the disclosure may generate a first audio vector Audio_Vec_1 corresponding to the first voice Voice_1 by using a first artificial neural network NN1. In this case, the first audio vector Audio_Vec_1 may indistinguishably include a text feature value Text_Feature of the first voice Voice_1, a voice feature value Voice_Feature of the first voice Voice_1, and a style feature value Style_Feature of the first voice Voice_1.

In the disclosure, the term 'feature value Text_Feature' may refer to a value that indicates a content feature of a string or in which the content feature is reflected. Such a text feature value Text_Feature may be generated according to a process of dividing a text into characters and converting each character into a vector value. However, this is merely an example, and the spirit of the disclosure is not limited thereto.

In the disclosure, the term 'style feature value Style_Feature' may refer to a value corresponding to at least one of an emotion of a speaker, a situation of the speaker, and a speaking habit of the speaker. Such a style feature value may be a value in which, for example, a speaking speed of a speaker or a habit of pronouncing with a specific final consonant is reflected.

In the disclosure, the term 'voice feature value Voice_Feature' may refer to a value corresponding to fundamental voice characteristics of a speaker, regardless of an emotion of the speaker or a situation of the speaker.

In the disclosure, the term 'first artificial neural network NN1' may refer to a neural network that is trained, based on training data including a voice and a vector corresponding to the voice, about a correlation between the voice and the vector included in the training data.

Accordingly, the first artificial neural network NN1 may output, according to an input of a voice to be vectorized, an audio vector corresponding to the voice.

In the disclosure, the first audio vector Audio_Vec_1 output (or generated) by the first artificial neural network NN1 according to an input of the first voice Voice_1 may indistinguishably include the text feature value Text_Feature of the first voice Voice_1, the voice feature value Voice_Feature of the first voice Voice_1, and the style feature value Style_Feature of the first voice Voice_1 as described above. Here, 'indistinguishably' may mean that individual feature values may not be distinguished by using general technology or intuitively.

According to the prior art, because the three feature values are indistinguishably included in a vector, the individual feature values may not be appropriately used. For example, in an audio vector, an operation of converting a voice by extracting and changing only a voice feature value or converting a style by extracting and changing only a style feature value may not be performed, unlike in the present application.

According to the disclosure, however, in an audio vector generated from a voice by using a trained artificial neural network, voice conversion with significantly improved quality may be performed by extracting and replacing only a component contributing to a voice feature of the voice.

In particular, according to the disclosure, in an audio vector, when only a component contributing to a voice feature of a voice is extracted, more precise conversion may be performed by extracting the component by referring to the remaining components, which will be described below in detail.

The voice converter 110B according to the second embodiment of the disclosure may generate a first text feature value Text_Feature_1 corresponding to the first text Text_1 by using a second artificial neural network NN2. In this case, the first text Text_1 may be a text that is generated by the voice-text conversion engine STT Engine from the first voice Voice_1 and corresponds to the first voice Voice_1. Accordingly, the first voice Voice_1 may be a voice according to utterance of the first text Text_1 of a first speaker.

In the disclosure, the term 'second artificial neural network NN2' may refer to a neural network that is trained, based on training data including a text and a vector corresponding to content of the text, about a correlation between the text and the vector included in the training data.

Accordingly, the second artificial neural network NN2 may output, according to an input of a text, a text feature value corresponding to content of the text.

In an optional embodiment of the disclosure, the voice converter 110B may generate the style feature value Style_Feature corresponding to the first voice Voice_1 by using a fourth artificial neural network (not shown).

In the disclosure, the term 'fourth artificial neural network (not shown)' may refer to a neural network that is trained, based on training data including a voice and a style feature value corresponding to the voice, about a correlation between the voice and the style feature value included in the training data.

Accordingly, the fourth artificial neural network (not shown) may output, according to an input of a voice, a style feature value corresponding to the voice.

The voice converter 110B according to the second embodiment of the disclosure may generate a second audio vector Audio_Vec_2 by removing the voice feature value Voice_Feature of the first voice from the first audio vector Audio_Vec_1 by using the first text feature value Text_Feature_1 generated according to the above process and a third artificial neural network NN3.

In the disclosure, the term 'third artificial neural network NN3' may refer to a neural network that is trained to output, according to an input of a voice vector and a text feature value, a voice vector from which a voice feature value is removed.

In the second embodiment of the disclosure, the style feature value Style_Feature may be a constant (i.e., a value that does not change according to a change in a speaker). Accordingly, the voice converter 110B may generate the second audio vector Audio_Vec_2 by removing the voice feature value Voice_Feature of the first voice from the first audio vector Audio_Vec_1, by considering only the first text feature value Text_Feature_1.

In the disclosure, because the second audio vector Audio_Vec_2 is a vector from which the voice feature value Voice_Feature is removed as described above, the second audio vector Audio_Vec_2 may be a vector having a potential to be changed, according to addition of a voice feature value of a speaker, into a voice of the speaker.

In an optional embodiment of the disclosure further including the fourth artificial neural network, the voice converter 110B may generate the second audio vector Audio_Vec_2 by further considering a style feature value identified from the first voice Voice_1, in addition to the first text feature value Text_Feature_1.

The voice converter 110B according to the second embodiment of the disclosure may identify a voice feature value Target_Voice_Feature of a target voice by using a voice feature generator.

In this case, the voice feature generator may be implemented in various ways. For example, the voice feature generator may be configured to output, according to an input of an identification number (or identification information) of a target speaker, a voice feature value of the target speaker. To this end, the voice feature generator may be configured to include a pre-built database, and features of a plurality of target voices and identification information may be matched to each other and may be stored in the database.

Also, the voice feature generator may include an artificial neural network that outputs, according to an input of a voice, a voice feature value of the voice. In this case, the voice converter 110B may input a voice to the voice feature generator, and may obtain (or identify) a voice feature value of the voice as a response.

However, the implementation method of the voice feature generator is merely an example, and the spirit of the disclosure is not limited thereto.

The voice converter 110B according to the second embodiment of the disclosure may generate the second voice Voice_2 in which a feature of the target voice is reflected by using the second audio vector Audio_Vec_2 and the voice feature value Target_Voice_Feature of the target voice. In this case, the target voice may be, for example, a voice of a second speaker.

Accordingly, according to the disclosure, voice conversion with significantly improved quality may be performed. In particular, in an audio vector, when only a component contributing to a voice feature of a voice is extracted, more precise conversion may be performed by extracting the component by referring to the remaining components. Also, only a component contributing to a voice feature of a voice may be replaced, even without a separate text input.

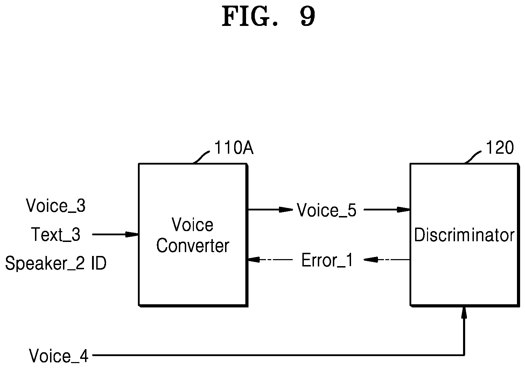

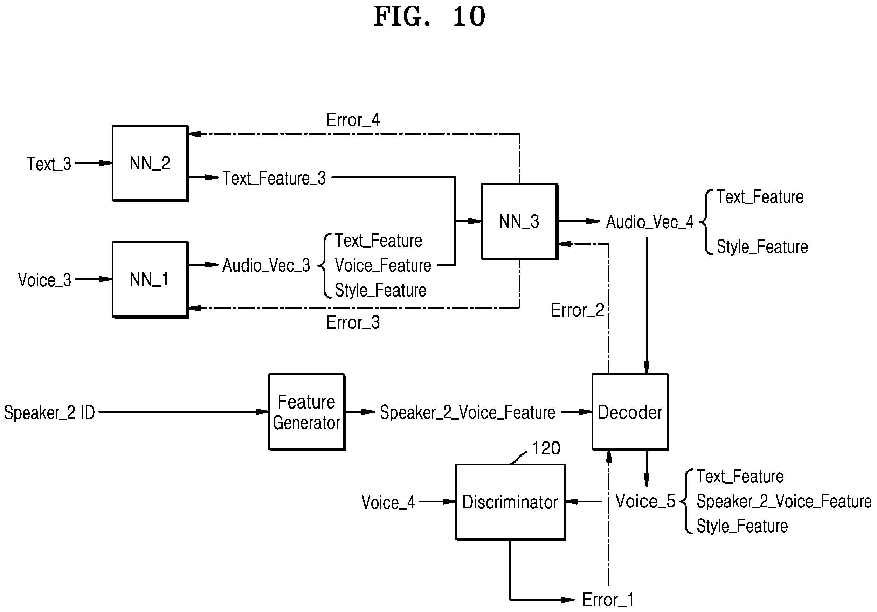

FIGS. 9 and 10 are diagrams for describing a training process of the voice converter 110A according to the first embodiment of the disclosure. The following will be described with reference to FIGS. 9 and 10 together.

The voice converter 110A according to the first embodiment of the disclosure may generate a fifth voice Voice_5 in which a voice feature Speaker_2_Voice_Feature of a second speaker is reflected from a third voice Voice_3 by using a first artificial neural network NN1, a second artificial neural network NN2, and a third artificial neural network NN3. In this case, the third voice may be a voice according to utterance of a third text Text_3 of a first speaker.

A process of generating the fifth voice Voice_5 in which a voice feature of the second speaker is reflected from the third voice Voice_3 has been described with reference to FIGS. 5 and 6, and thus a detailed description thereof will be omitted.

The voice converter 110A according to the first embodiment of the disclosure may train the first artificial neural network NN1, the second artificial neural network NN2, and the third artificial neural network NN3 based on a difference between the fifth voice Voice_5 and a fourth voice Voice_4. In this case, the fourth voice Voice_4 may be a voice according to utterance of the third text Text_3 of the second speaker.

For example, the voice converter 110A according to the first embodiment of the disclosure may obtain an error Error_1 by inputting the fourth voice Voice_4 and the fifth voice Voice_5 to a discriminator 120. Also, the voice converter 110A may calculate errors Error_2, Error_3, and Error_4 for one or more elements by propagating the obtained error Error_1 in a reverse direction. Also, the voice converter 110A may train the first artificial neural network NN1, the second artificial neural network NN2, and the third artificial neural network NN3 by adjusting parameters of the elements to reduce the calculated errors Error_1, Error_2, Error_3, and Error_4.

As such, according to the disclosure, the accuracy of voice conversion may be improved by training the first through third artificial neural networks NN1, NN2, and NN3 by using a difference between a voice (the fourth voice Voice_4) generated according to utterance of the same speaker and a voice (the fifth voice Voice_5) generated according to conversion.

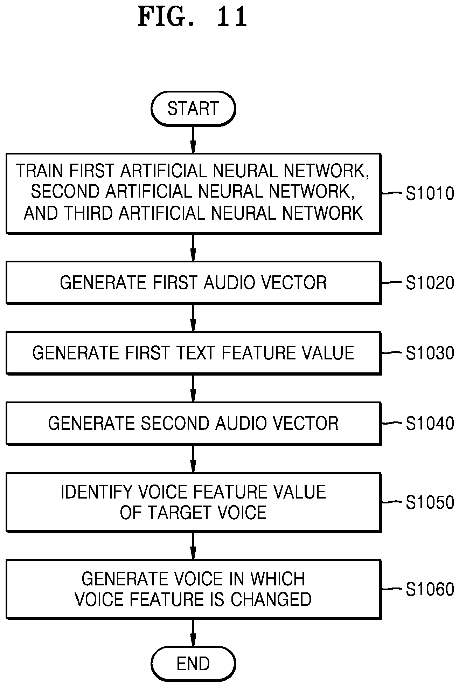

FIG. 11 is a flowchart for describing a method of converting a voice feature of a voice performed by the voice converter 110A according to the first embodiment of the disclosure. The following will be described with reference to FIGS. 1 through 6 and 9 through 10 together.

The voice converter 110A according to an embodiment of the disclosure may train the first artificial neural network NN1, the second artificial neural network NN2, and the third artificial neural network NN3 by using a difference between a voice of a speaker and a voice converted to target the speaker (S1010).

FIGS. 9 and 10 are diagrams for describing a training process of the voice converter 110A according to the first embodiment of the disclosure. The following will be described with reference to FIGS. 9 and 10 together.

The voice converter 110A according to the first embodiment of the disclosure may generate the fifth voice Voice_5 in which the voice feature Speaker_2_Voice_Feature of the second speaker is reflected from the third voice Voice_3 by using the first artificial neural network NN1, the second artificial neural network NN2, and the third artificial neural network NN3. In this case, the third voice may be a voice according to utterance of the third text Text_3 of the first speaker.

A process of generating the fifth voice Voice_5 in which a voice feature of the second speaker is reflected from the third voice Voice_3 has been described with reference to FIGS. 5 and 6, and thus a detailed description thereof will be omitted.

The voice converter 110A according to the first embodiment of the disclosure may train the first artificial neural network NN1, the second artificial neural network NN2, and the third artificial neural network NN3 based on a difference between the fifth voice Voice_5 and the fourth voice Voice_4. In this case, the fourth voice Voice_4 may be a voice according to utterance of the third text Text_3 of the second speaker.

For example, the voice converter 110A according to the first embodiment may obtain the error Error_1 by inputting the fourth voice Voice_4 and the fifth voice Voice_5 to the discriminator 120. Also, the voice converter 110A may calculate the errors Error_2, Error_3, and Error_4 for one or more elements by propagating the obtained error Error_1 in a reverse direction. Also, the voice converter 110A may train the first artificial neural network NN1, the second artificial neural network NN2, and the third artificial neural network NN3 by adjusting parameters of the elements to reduce the calculated errors Error_1, Error_2, Error_3, and Error_4.

As such, according to the disclosure, the accuracy of voice conversion may be improved by training the first through third artificial neural networks NN1, NN2, and NN3 by using a difference between a voice (the fourth voice Voice_4) according to utterance of the same speaker and a voice (the fifth voice Voice_5) generated according to conversion.

The following will be described with reference to FIGS. 5 and 6 together.

The voice converter 110A according to the first embodiment of the disclosure may generate the first audio Audio_Vec_1 corresponding to the first voice Voice_1 by using the first artificial neural network NN1 (S1020). In this case, the first audio vector Audio_Vec_1 may indistinguishably include the text feature value Text_Feature of the first voice Voice_1, the voice feature value Voice_Feature of the first voice Voice_1, and the style feature value Style_Feature of the first voice Voice_1.

In the disclosure, the term 'text feature value Text_Feature' may refer to a value that indicates a content feature of a string corresponding to a voice or in which the content feature is reflected. Such a text feature value Text_Feature may be generated according to a process of dividing a text into characters and converting each character into a vector value. However, this is merely an example, and the spirit of the disclosure is not limited thereto.

In the disclosure, the term 'style feature value Style_Feature' may refer to a value corresponding to at least one of an emotion of a speaker, a situation of the speaker, and a speaking habit of the user. Such a style feature value may be a value in which, for example, a speaking speed of a speaker or a habit of pronouncing with a specific final consonant is reflected.

In the disclosure, the term 'voice feature value Voice_Feature' may refer to a value corresponding to fundamental voice characteristics of a speaker, regardless of an emotion of the speaker or a situation of the speaker.

In the disclosure, the term 'first artificial neural network NN1' may refer to a neural network that is trained, based on training data including a voice and a vector corresponding to the voice, about a correlation between the voice and the vector included in the training data.

Accordingly, the first artificial neural network NN1 may output, according to an input of a voice to be vectorized, an audio vector corresponding to the voice.

In the disclosure, the first audio vector Audio_Vec_1 output (or generated) by the first artificial neural network NN1 according to an input of the first voice Voice_1 may indistinguishably include the text feature value Text_Feature of the first voice Voice_1, the voice feature value Voice_Feature of the first voice Voice_1, and the style feature value Style_Feature of the first voice Voice_1. Here, 'indistinguishably' may mean that individual feature values may not be distinguished by using general technology or intuitively.

According to the prior art, because the three feature values are indistinguishably included in a vector, the individual feature values may not be appropriately used. For example, in an audio vector, an operation of converting a voice by extracting and changing only a voice feature value or converting a style by extracting and changing only a style feature value may not be performed, unlike in the present application.

According to the disclosure, however, in an audio vector generated from a voice by using a trained artificial neural network, voice conversion with significantly improved quality may be performed by extracting and replacing only a component contributing to a voice feature of the voice.

In particular, according to the disclosure, in an audio vector, when only a component contributing to a voice feature of a voice is extracted, more precise conversion may be performed by extracting the component by referring to the remaining components, which will be described below.

The voice converter 110A according to the first embodiment of the disclosure may generate the first text feature value Text_Feature_1 corresponding to the first text Text_1 by using the second artificial neural network NN2 (S1030). In this case, the first text Text_1 may be a text corresponding to the first voice Voice_1. In other words, the first voice Voice_1 may be a voice according to utterance of the first text Text_1 of the first speaker.

In the disclosure, the term 'second artificial neural network NN2' may refer to a neural network that is trained, based on training data including a text and a vector corresponding to content of the text, about a correlation between the text and the vector included in the training data.

Accordingly, the second artificial neural network NN2 may output, according to an input of a text, a text feature value corresponding to content of the text.

In an optional embodiment of the disclosure, the voice converter 110A may generate the style feature value Style_Feature corresponding to the first voice Voice_1 by using the fourth artificial neural network (not shown).

In the disclosure, the term 'fourth artificial neural network (not shown)' may refer to a neural network that is trained, based on training data including a voice and a style feature value corresponding to the voice, about a correlation between the voice and the style feature value included in the training data.

Accordingly, the fourth artificial neural network (not shown) may output, according to an input of a voice, a style feature value corresponding to the voice.

The voice converter 110A according to the first embodiment of the disclosure may generate the second audio vector Audio_Vec_2 by removing the voice feature value Voice_Feature of the first voice from the first audio vector Audio_Vec_1 by using the first text feature value Text_Feature_1 generated according to the above process and the third artificial neural network NN3 (S1040).

In the disclosure, the term 'third artificial neural network NN3' may refer to a neural network that is trained to output, according to an input of a voice vector and a text feature value, a voice vector from which a voice feature value is removed.

In the first embodiment of the disclosure, the style feature value Style_Feature may be a constant (i.e., a value that does not change according to a change in a speaker). Accordingly, the voice converter 110A may generate the second audio vector Audio_Vec_2 by removing a voice feature value Voice_Feature of the first voice from the first audio vector Audio_Vec_1, by considering only the first text feature value Text_Feature_1.

In the disclosure, because the second audio vector Audio_Vec_2 is a vector from which the voice feature value Voice_Feature is removed as described above, the second audio vector Audio_Vec_2 may be a vector having a potential to be changed, according to addition of a voice feature value of a speaker, into a voice of the speaker.

In an optional embodiment of the disclosure further including the fourth artificial neural network, the voice converter 110A may generate the second audio vector Audio_Vec_2 by further considering a style feature value identified from the first voice Voice_1, in addition to the first text feature value Text_Feature_1.

The voice converter 110A according to the first embodiment of the disclosure may identify the voice feature value Target_Voice_Feature of the target voice by using the voice feature generator (S1050).

In this case, the voice feature generator may be implemented in any of various ways. For example, the voice feature generator may be configured to output, according to an input of an identification number (or identification information) of a target speaker, a voice feature value of the target speaker. To this end, the voice feature generator may be configured to include a pre-built database, and features of a plurality of target voices and identification information may be matched to each other and may be stored in the database.

Also, the voice feature generator may include an artificial neural network that outputs, according to an input of a voice, a voice feature value of the voice. In this case, the voice converter 110A may input a voice to the voice feature generator, and may obtain (or identify) a voice feature value of the voice as a response.

However, the implementation method of the voice feature generator is merely an example, and the spirit of the disclosure is not limited thereto.

The voice converter 110A according to the first embodiment of the disclosure may generate the second voice Voice_2 in which a feature of the target voice is reflected by using the second audio vector Audio_Vec_2 and the voice feature value Target_Voice_Feature of the target voice (S1060). In this case, the target voice may be, for example, a voice of the second speaker.

Accordingly, according to the disclosure, voice conversion with significantly improved quality may be performed. In particular, in an audio vector, when only a component contributing to a voice feature of a voice is extracted, more precise conversion may be performed by extracting the component by referring to the remaining components.

Meanwhile, the embodiments of the disclosure may be implemented as computer programs executable through various components on a computer, and the computer programs may be stored in a computer-readable medium. In this case, the medium may store computer-executable programs. Examples of the medium include magnetic media such as a hard disk, a floppy disk, and a magnetic tape, optical recording media such as a compact disc read-only memory (CD-ROM) and a digital versatile disc (DVD), magneto-optical media such as a floptical disk, and a ROM, a random-access memory (RAM), and a flash memory, which are configured to store program instructions.

The computer programs may be specially designed and configured for the disclosure or may be well-known to and be usable by one of ordinary skill in the art of computer software. Examples of the program programs include advanced language codes that may be executed by a computer by using an interpreter or the like as well as machine language codes made by a compiler.

Specific execution methods described in the disclosure are examples, and the scope of the disclosure is not limited by any method. For the sake of brevity, conventional electronics, control systems, software, and other functional aspects of the systems may not be described in detail. Also, lines or members connecting elements illustrated in the drawings are merely illustrative of functional connections and/or physical or circuit connections. In an actual device, the connections between components may be represented by various functional connections, physical connections, or circuit connections that are replaceable or added. Moreover, no item or component is essential to the practice of the disclosure unless the item or component is specifically described as "essential" or "critical".

Accordingly, the spirit of the disclosure is not limited to the above-described embodiments, and all ranges equivalent to the claims or equivalently changed therefrom as well as the claims described below belong to the scope of the spirit of the disclosure.

## Claims

1. A method of converting a voice feature of a voice, the method comprising:
generating a first audio vector corresponding to a first voice by using a first artificial neural network, wherein the first audio vector indistinguishably comprises a text feature value of the first voice, a voice feature value of the first voice, and a style feature value of the first voice, and the first voice is a voice according to utterance of a first text of a first speaker;
generating a first text feature value corresponding to the first text by using a second artificial neural network;
generating a second audio vector by removing the voice feature value of the first voice from the first audio vector by using the first text feature value and a third artificial neural network; and
generating, by using the second audio vector and a voice feature value of a target voice, a second voice in which a feature of the target voice is reflected.

2. The method of claim 1, wherein
the generating of the first text feature value comprises:
generating a second text from the first voice; and
generating the first text based on the second text.

3. The method of claim 1,
before the generating of the first audio vector,
the method further comprising
training the first artificial neural network, the second artificial neural network, and the third artificial neural network.

4. The method of claim 3, wherein
the training comprises:
generating a fifth voice in which a voice feature of a second speaker is reflected from a third voice by using the first artificial neural network, the second artificial neural network, and the third artificial neural network, wherein the third voice is a voice according to utterance of a third text of the first speaker; and
training the first artificial neural network, the second artificial neural network, and the third artificial neural network based on a difference between the fifth voice and a fourth voice, wherein the fourth voice is a voice according to utterance of the third text of the second speaker.

5. The method of claim 1,
before the generating of the second voice,
the method further comprising
identifying the voice feature value of the target voice.
